# EUROPEAN PATENT SPECIFICATION

(11) **EP 2 416 685 B1**
(45) Date of publication and mention of the grant of the patent: **25.12.2013**
(21) Application number: 10713241.7
(22) Date of filing: 07.04.2010
(51) Int. Cl.: A47J 37/07

(54) **SOLID FUEL OUTDOOR COOKING DEVICE**
FESTBRENNSTOFFVORRICHTUNG ZUM GAREN IM FREIEN
DISPOSITIF DE CUISSON EXTÉRIEUR À COMBUSTIBLE SOLIDE

(30) Priority: 08.04.2009 GB 0906096
(43) Date of publication of application: 15.02.2012
(73) Proprietor: Charbecue Limited, Sleaford, Lincolnshire NG34 7EQ (GB)
(72) Inventor: SAMMUT, John, Charles, Sleaford, Lincolnshire NG34 7EQ (GB); HARDS, Philip John, Sleaford, Lincolnshire NG34 7EQ (GB)
(74) Representative: Morris, Jonathan Paul
(86) International application number: PCT/GB2010/050598
(87) International publication number: WO 2010/116183

(56) References cited:
- US-A- 1 433 845
- US-A- 2 665 682
- US-A- 4 471 748
- US-A1- 2001 035 176

## Description

This invention relates to a cooking device, and in particular to an outdoor cooking device which can be used to cook large joints or pieces of meat. Specifically the invention is directed to a cooking device designed to cater for large pieces of meat such as a whole pig, lamb or side of beef.

It is known to cook large joints of meat for example weighing up to 45 kg such as a whole pig, lamb or a side of beef. This may be for commercial and domestic purposes for to feed large numbers of people in a practical manner. In addition cooking such large pieces of meat may improve the flavour, and, for example with a 'hog roast' style may provide a spectacle. Often such large pieces of meat are cooked outdoors, in a barbecue style, and in particular using a solid fuel such as charcoal or wood, for both practical reasons and to enhance the flavour. Other fuel sources may however be used, for example gas burners.

However there are specific problems associated with cooking such large pieces of meat. Firstly the size of the meat joint means that a relatively large cooking device and heat source is needed. This often dictates the use of specialist equipment and cooking outdoors rather than using conventional cooking devices. In addition due to the density and size of the meat a relatively long cooking period is needed to thoroughly cook the meat. This can lead to the outside areas of the meat being burnt. Meat items also contain fat and juices, and with large meat pieces significant quantities of liquid, which come out of the meat during cooking. This can lead to the meat undesirably drying out as it is cooked unless special care is taken. Such fat and juices also need to be collected and if they fall on the heat source, for example the solid fuel, they will then bum, undesirably creating smoke, which may cause the heat source and fire to 'flare-up' and burn the meat, and/or may even put out the heat source. In particular to partly address this, the large meat joint may often need to be 'sealed' on the outside using an initial high heat and then cooked over a longer period at a lower heat. The juices and fat may also be collected in some way and meat joint may be 'basted' with these collected juices or additional juices as it cooks requiring careful tending and removal from the heat or opening of the cooking device which is undesirable. Once the large meat joint is cooked there are also problems in keeping the meat warm as it is served, which may take some time with a large piece of meat, and without the meat being burnt or drying out.

Overall it will be appreciated that the cooking of such large pieces of meat, can be problematic and is very different, with different technical and practical considerations to the cooking of smaller items of food, that have no significant density or volume such as steak, burgers, fish and pizzas. Also cooking outside, as generally is the case with cooking such large pieces of meat is very different to indoor cooking. Furthermore cooking using a solid fuel is very different to cooking with other heat sources, for example electric or gas, with in particular temperature control being much more difficult. Conventional cooking devices, ovens and barbecues are generally not suitable for cooking such large pieces of meat. Very specific specialised cooking devices are therefore required for cooking such large meat pieces, and in particular to cooking such large meat pieces outdoors and/or using a solid fuel. Such specialised dedicated equipment however is undesirable as it tends to be restricted to one type of cooking application and other equipment may be needed to cook other items.

Examples of cooking devices for cooking large meat joints include a spit roast arrangement in which the meat is held on a rod or spit and rotated above a fire or other heat source as it cooks to prevent it from burning and cook the meat all around. Alternatively in a traditional hog roast the meat is placed on a grill above a fire or other heat source, with possibly with a light enclosure over the top to retain some heat. In such a case to prevent burning and cook the meat evenly, the meat must be turned a number of times as it cooks which can be difficult with such a large piece of meat. In addition the meat must be basted and additional fat applied to the outside to prevent it from drying out. The additional fat applied and also coming out of the meat in both cases can cause problems as discussed above.

JP2005114239 proposes a specific indoor cooking device using solid fuel, held in a cassette, and which heats a pot above the fuel and also provides heat to food placed below. The solid fuel is held on a mesh above the food below so that radiant heat from the burning solid fuel can be radiated to the food below to in affect grill the food below. It is described that by placing the food below the fuel the fat and juices from the food do not fall on the burning solid fuel and so smoke is reduced so that the cooking device can be specifically used indoors and at a table top in a restaurant. This device is however specifically designed for cooking small items and small scale indoor cooking, and does not contemplate being used to cook large meat pieces outdoors. Indeed it is completely unsuitable for cooking large pieces of meat over a long period. In particular this device does not contemplate refuelling of the solid fuel during cooking as is required with cooking over a longer period, with it generally being directed to short cooking periods in which it does not require a significant amount of fuel and which does not create significant amounts of ash during the cooking period which may fall through the mesh onto the food below. In addition there appears to be no means to control the temperature except for removing the solid fuel cassette.

US4442762 proposes a meat roaster for large meat times that are held on a rotating spit over a firebox, with a lid closing over the roasting spit and top of the fire box. This arrangement is similar to conventional spit roasting and may dry the meat out. In addition the meat juices and fat are prone to falling onto the burning coals in the fire box causing them to flare up and generate smoke.

FR2845584 proposes a barbecue pizza oven in which solid fuel is placed on a perforated plate with a grill above the plate and fuel on which meat can be barbecued, and in which a pizza can be placed below the perforated plate to be cooked. The pizza is cooked by radiation from the coals and specifically requires and teaches using a perforated top plate upon which the coals are supported and to allow heat to be transmitted to the pizza below. This arrangement is however again not directed to the very different problem of cooking large meat joints, and is unsuitable for such use. Firstly the proposed device is much too small. Moreover pizzas are much smaller and less dense and so require a much shorter cooking period. Refuelling of the solid fuel is not needed. The degree of temperature control or different cooking conditions required to roast and cook a large meat joint is also very different.

WO 00/69317 proposes a portable cooking device comprising a fuel chamber mounted above an oven chamber, with an apertured plate between the two chambers permitting an airflow between them. This is somewhat similar to the pizza oven described above, and also appears to be for cooking relatively small items.

It is therefore desirable to provide an improved cooking device for cooking large meat pieces, and in particular cooking such large meat pieces outdoors using solid fuel, which addresses the above described problems and/or which more generally offers improvements or an alternative to existing arrangements. In addition it is also desirable to provide a flexible outdoor cooking device that can be used to cook in a variety of different manners, such that it can be widely used to in particular cook large meat items and other items in a number of different ways and/or at the same time.

According to the present invention there is therefore provided a cooking device as described in the accompanying claims.

In an embodiment of the invention there is provided a cooking device for cooking large food items. The cooking device comprises a plurality of walls defining an enclosed oven cavity for receiving the food items to be cooked, and a heat source for heating the oven cavity. The plurality of walls include a top wall and at least one moveable, and preferably removable, door to allow access to the cavity. The top wall is non-perforated and the plurality of walls define a substantially sealed oven cavity. The heat source is arranged to directly heat the top wall from above to heat the oven cavity.

Such an arrangement provides for improved cooking of the food item, retaining moisture in the oven cavity and avoiding burning of the juices coming from the food items.

While the oven cavity is substantially sealed at least one adjustable vents may be provided in the in the wall and/or door panel to provide a controlled airflow to adjust the temperature within the oven cavity.

The top wall is preferably configured to support a solid fuel heat source. In particular a fuel support mesh or grill is preferably mountable above the top wall to support a solid fuel heat source. An ash chute may be provided to attachable to the top wall. Locators may be provided on the top wall to support and locate the fuel support and/or ach chute.

Alternatively the heat source may comprise a gas burner mounted above and arranged to heat the top wall.

The top wall may include an upstanding flange extending upwardly from at least one edge of the wall. The upstanding flange preferably does not extend from at least a portion of one edge of the top wall.

The cooking device includes an upper support frame extending upwardly above the top wall and arranged to support an additional element above the top wall and heat source. The additional element may comprise a mesh or grill or hot plate or spit roast or automatic kebab rotary system or other accessory supportable on the support frame. The support frame and additional element define a secondary cooking station.

The support frame is preferably adjustable to vary the height at which the additional element is supported above the top wall.

The support frame may include locators configured to engage and locate the additional element on the support frame.

The cooking device may have downwardly extending legs extending from the cooking device for supporting the cooking device.

Accordingly to address the above problems and considerations, the present invention proposes placing the solid fuel on a mesh grid which in turn is placed directly on top of the lower cooking station allowing heat to radiate into the lower vessel. The sealed unit that forms the lower cooking station is a sealed environment, and has been specifically designed to cater for large joints or pieces of meat. This arrangement provides for a number of advantages, which include:
• As the meat is in a sealed environment and not subject to the elements, accurate cooking and serving times can be achieved.
• The device requires minimal maintenance, no basting, or frequent turning of the meat such as on a spit is needed. Meat cooked in the lower station only needs to be turned once.
• Food cooked in the lower station will also remain free from possible contamination by ash being blown onto the food as a result of a gust of wind

The framework placed over the heat source allows simultaneous cooking above and below the same heat source. The location of the solid fuel allows for more efficient use of the fuel, and cooking and other use of the space above the fuel. This also allows for the grid on which the solid fuel is placed, to be temporarily relocated, so as clean away safely any ash or other debris as and when required. The frame work may preferably include height adjustment to provide greater control of the cooking above the heat source. When meat has been cooked in the lower station, the framework may also provide a location that will allow the meat to be kept warm, whilst carving or serving.
The upper framework is also designed to provide for mounting of a variety of attachment to provide improved flexibility.

The doors can easily be replaced by attachments such as a smoker.

The present invention will now be described by way of example only with reference to the following Figures in which:
Figure 1 is a schematic perspective illustration of the cooking device in accordance with an embodiment of the present invention, with the door in the open position and the meat joint placed on the upper support frame;
Figure 2 is a schematic perspective illustration of the cooking device shown in Figure 1, but with the coals placed on the upper support frame, and the door in the closed position with the meat shown in phantom within the oven cavity;
Figure 3 is a schematic perspective illustration of the cooking device shown in Figure 2, but with the ash chute attached for removal of the ash;
Figure 4 is a schematic perspective illustration of a drip tray for use within the cooking device shown in Figures 1 to 3;
Figure 5 is a schematic perspective illustration of a rack in an open configuration used to hold a meat joint and for use within the cooking device shown in Figures 1 to 3;
Figure 6 is a schematic perspective illustration of the rack shown in Figure 5 enclosing a meat item for use within the cooking device shown in Figures 1 to 3;
Figure 7 is a schematic perspective illustration of the optional rotisserie attachment;
Figure 8 is a schematic perspective illustration of the optional alternate smoker door fitted to the cooking device and with the upper support frame and cooking station omitted;
Figure 9 is a schematic perspective illustration of a griddle hot plate that may be mounted on the upper support frame of the cooking device shown in Figures 1 to 3;
Figure 10 is a schematic perspective illustration of the cooking device in accordance with another embodiment, including an optional warming section;
Figure 11 is a schematic rear perspective illustration of the cooking device in accordance with another embodiment of the present invention, and with a front door in the open position;
Figure 12 is a rear view of the cooking device shown in figure 11; and
Figure 13 is an end view of the cooking device shown in figure 11.

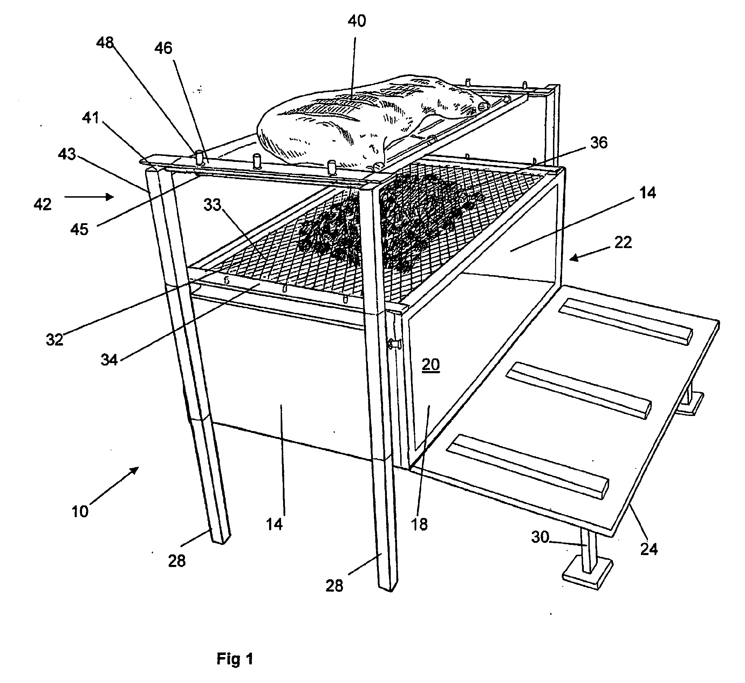

Referring to the Figures 1 to 3 the cooking device 10 in particular specifically for use outside, comprises a top plate 12, a bottom plate 18, end walls 14 and a rear wall 16 interconnecting and spacing apart the top and bottom plates, and a door panel 24 forming walls of an oven box structure 22 and defining an enclosed oven cavity 20. The oven cavity 20 defined by the walls, and when the door panel 24 is closed, is a substantially sealed unit and oven cavity 20. The box structure 22 and cavity 20 is sized so as to receive large food items, in particular large joints of meat for example weighing up to 45 kg such as a whole pig, lamb or a side of beef, to be cooked. In one embodiment the oven box structure 22 may be 1115mm long, by 610mm wide and 375 high. In this embodiment the box structure 22 defined by the walls 14, 16 is rectangular, although it will be appreciated that in other embodiments the box structure 22 may have a different shape and size.

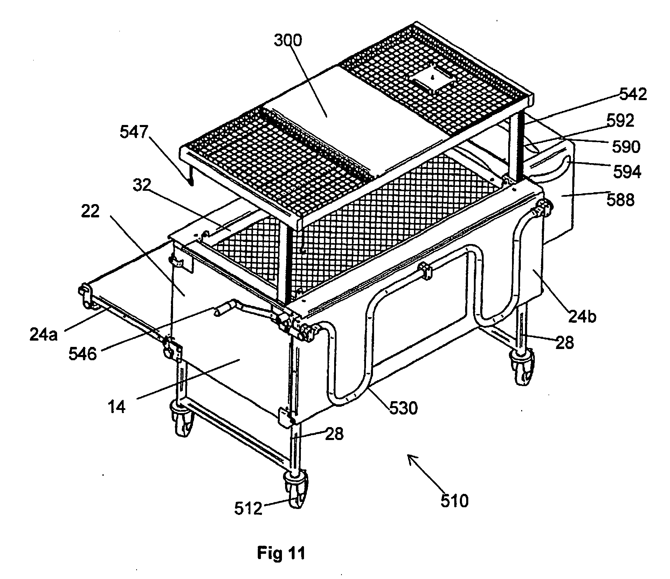

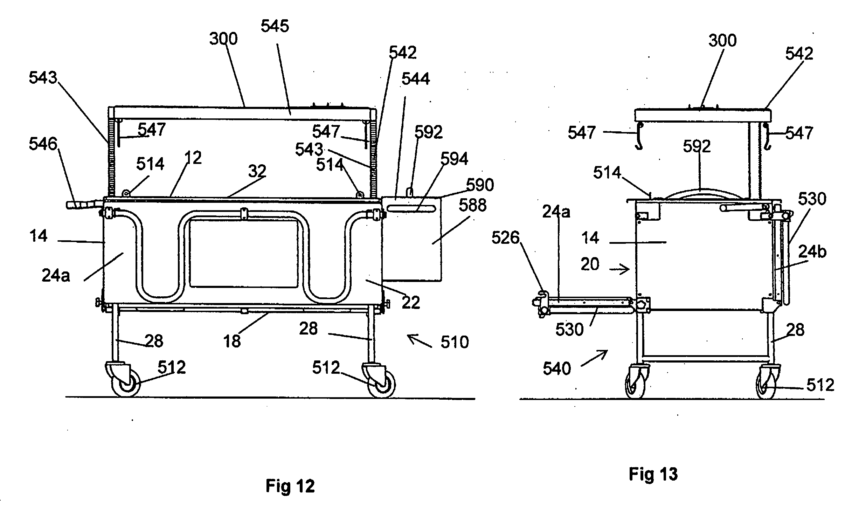

The cooking device 10 and oven box structure 22 is supported on supports for example four legs 28 extending downwardly such that the cooking device 10 is supported at a convenient height from the ground. The legs 28 may be adjustable in height and made of suitable material. Lockable wheels or castors (as shown in figures 11 to 13) may be fitted on the end of the legs 28 to allow easier movement of the device 10.

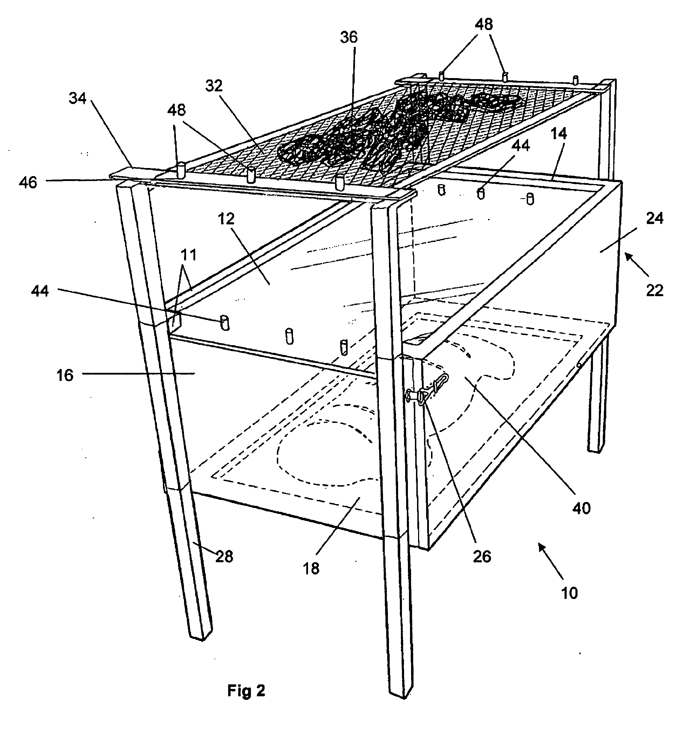

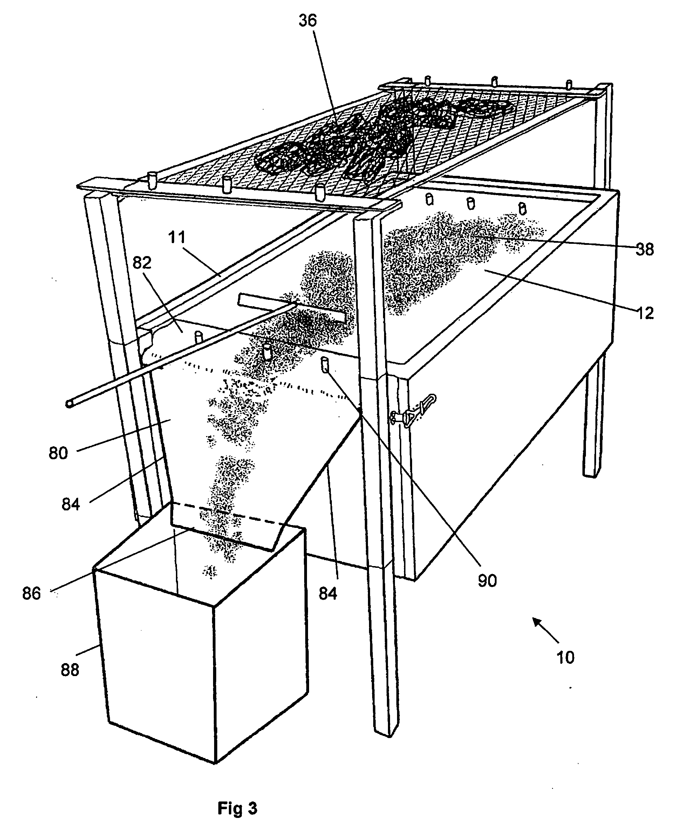

The door panel 24 is hinged along a bottom edge such that the door panel 24 can be pivoted to allow access to the interior cavity 20 (Figure 1). The door panel 24 may also include optional swing down legs 30 (only shown in Figure 1 and omitted from the other Figures) pivotally mounted to the door panel 24 and which firmly supports the door panel 24 in a horizontal position. This enables items to be supported on the door panel 24 in the open position. Other arrangements for holding the door panel 24 open, for example stays interconnecting the door panel 24 and side walls 14 could be used. The swing down legs 30 can also be locked in place if required and used as handles to move the device 10 and door panel 24. When closed (Figures 2 & 3) the door panel 24 may be firmly secured and held closed using latching devices 26. The door panel 24 may also include a suitable peripheral seal to thereby seal the oven cavity when the door panel 24 is closed. It will also be appreciated that other door arrangements may be used using more than one door, and/or door panels 24 which are vertically hinged from the side edges. The rear wall 16 may also comprise a similar door panel 24 preferably removable mounted to the device 10 about the hinge to provide additional access to the oven cavity 20 whilst also sealing the oven cavity 20.

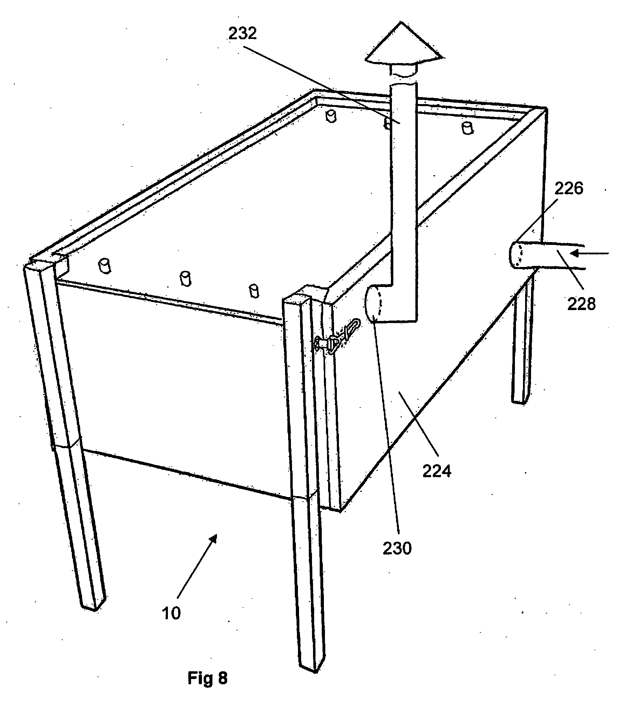

The door panel 24 is preferably removable mounted to the device 10 about the hinge such that it can be removed for easy cleaning. In addition the door panel 24 may also be replaced with other accessories which are fitted in place of the simple door panel 24 to provide further functionality to the cooking device. Such accessories may include a modified smoker door panel 224 including a 'smoker' for smoking meats and fish as shown in Figure 8. The smoker door 224 includes a smoke inlet 226 connected via a suitable duct 228 to a source of preferably flavoured smoke for example burning hickory chips. There is also a smoke outlet 230 connected to a vertical smoke chimney 232. The inlet 226 is preferably located to one side and towards to bottom of the door panel 224 and oven cavity 20 and supplies smoke from the smoke source to the oven cavity 20. The smoke outlet and chimney 232 are located on the opposite side and towards the top of the door and act to draw the smoke form the smoke inlet 226 through the oven cavity and over the food items within the oven cavity 20. The smoke outlet 230 and chimney 232 may also include a suitable adjustable valve arrangement to control and vary the flow of smoke through the chimney and so through the oven cavity 20

A heat source is arranged to directly heat the top plate 12. The top plate 12 comprises a non-perforated solid plate and is made of galvanised steel or other suitable metal so as to readily transmit heat from above to heat the cavity 20 as explained further below. In contrast the bottom plate 18, end walls 14, rear wall 16 and door panel 24 are made from an insulating filled material clad on the inside with a reflective heat resistant material for example aluminium sheet to thereby retain the heat supplied and temperature within the cavity 20.

While any heat source may be used to heat the top plate 12, including for example suitable gas burners, in the preferred embodiments the heat source comprises a solid fuel fire. More specifically a fuel support 32 comprising end frame members 34 supporting a mesh or grid 33 is mounted and supported above the top plate 12, as shown in Figure 1. The fuel support 32 is preferably securely located on the cooking device 10 by a suitable locating arrangement. In this embodiment two sets of three locating pins 44 project upwardly form the ends of the top plate and the end frame members 34 of the fuel support 32 including corresponding apertures 46 which are located on the pins 44 to locate and position the fuel support 32 over the top plate 12. The burning solid fuel 36 (for example charcoal or briquettes) is supported in use on the fuel support 32 slightly separated and spaced from the top plate 12, for example up to 10 mm from the top plate 12 with as shown the ends of the fuel support frame members 34 resting on upstanding flanges 11 around the edge of the top plate. In other embodiments other spacer blocks or arrangements could be used to space the fuel support frame 32 from the top plate. This spacing of the fuel support from the top plate 12 allows improved air circulation around the fuel 36 and also allows the resultant ash 38 to pass through the grid or mesh 32 to be retained and be more evenly distributed on the top plate 12 to provide more even heating. The burning solid fuel 36 is however still close enough to the top plate 12 and is effectively in direct contact with the top plate 12 to directly heat the top plate 12 and so the oven cavity 20 below. In particular the hot ashes 38 from the burning fuel 36 fall through the fuel support 32 and onto the no perforated top plate 12 to heat the top plate 12. The fuel support 32 is open and additional solid fuel 36 can be easily added as may be required. In other perhaps preferred embodiments the fuel support 32 may directly rest on and abut the top plate 12 with there being no space between the fuel support 32 and top plate 12 and the fuel support 32 simply allowing lifting of the solid fuel 36 for ash removal as discussed further below.

In use a food item, for example large meat joint 40, is placed within the oven cavity 20 to be cooked as shown in phantom in Figure 2. The initial heating from the top plate 12 heated by the heat source is provided to the meat joint 40 from above by radiation. However since with the door panel 24 the oven cavity 20 is substantially sealed, the air within the cavity 20 is also warmed from the top plate 12 and heat is retained within the oven cavity 20. As a result the meat joint 40 is also heated and cooked by convection from the heated air retained within the cavity 20 and surrounding the meat joint 40. In addition as the meat joint 40 cooks moisture from the meat joint 40 is released into the oven cavity 20. This warm moist air cannot escape, and is retained in the sealed oven cavity 40. This moist air is also heated within the cavity, and increases the convection heating and cooking of the meat joint 40. As the cooking continues and the volume of moisture in the oven cavity 20 environment increases so the proportion of convection cooking increases and radiation cooking directly from the top plate 12 decreases. Advantageously such cooking by convection and by the warm moist atmosphere within the oven cavity 20 and surrounding the meat joint 40, ensures that the meat joint 40 is evenly cooked from all sides, not just from above by radiation from the top plate 12. As a result this method of cooking means that the joints of meat 40 only need to be turned once, to ensure that both the top and bottom of the meat item are cooked. Furthermore such cooking in a moist warm atmosphere and retention of the moisture within the substantially sealed oven cavity 20 prevents further loss of moisture from the meat item since the oven cavity 20 is to some degree saturated such that the meat joints 40 do not require separate basting to retain moisture. This provides improved cooking of the meat item keeping the meat item moist and preventing it from drying out as well as reducing shrinkage of the meat joint 40.

The temperature of the oven cavity 20 and cooking of meat joint 40 contained within the oven cavity 20 may be controlled both by the heat source (for example the amount of fuel being burnt) and heating of the top plate 12. In addition one of more adjustable vents (not shown) may be provided in the walls and/or door panel. These vents can be opened and closed to allow and control airflow into and out of the oven cavity 20, so controlling the convention heating and so temperature.

It will be appreciated that while the oven cavity is sealed, it does not need to be 100% airtight but just substantially sealed to retain the majority of the moist heated air within the oven cavity 20 during cooking.

The heating of the cavity 20, and radiation heating of the meat item from above is also advantageous in that it can, especially initially, crisp up the upper side of the meat item to both seal the meat joint 10 and, for example in the case of a pork joint or hog roast produce 'crackling'. In addition by heating from above any juices and fat from the meat joint 40 do not fall onto the heat source or hot oven wall surfaces where they would burn and/or cause a flare up of fire and heat.

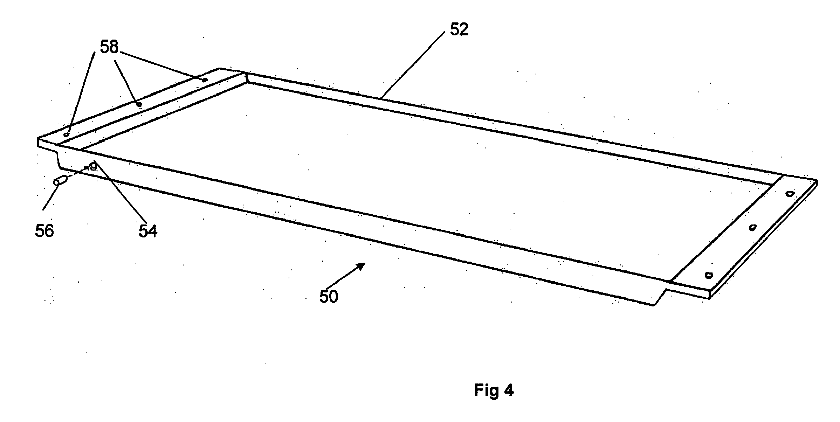

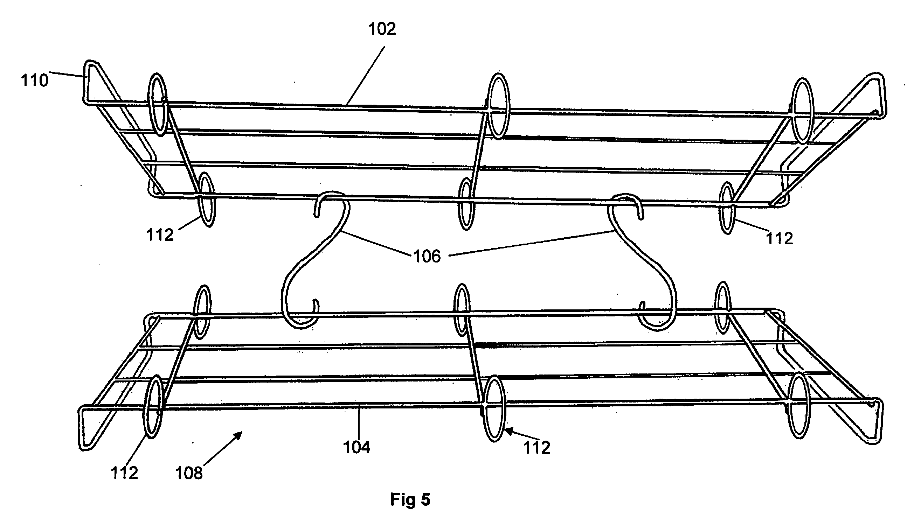

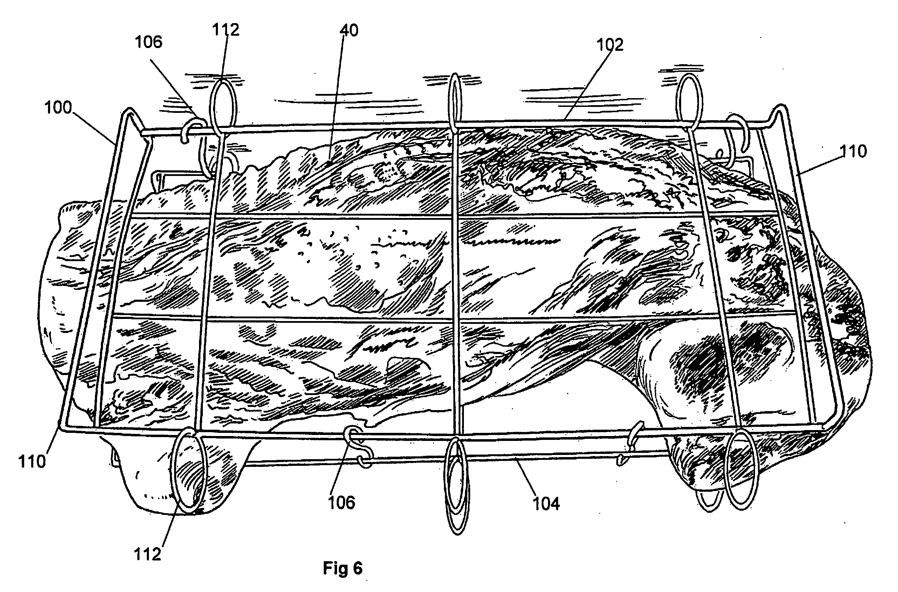

A drip tray 50, shown in Figure 4, made of galvanised sheet steel or other suitable material and having upturned edges 52 which are sealed at the corners to ensure it is watertight may be installed into the oven cavity 20. The drip tray 50 may for example simply rest on the bottom wall 18 of the oven cavity, or be supported on support ledges provided on the end walls 14. The meat joint 40 may be placed on the drip tray 50 or otherwise supported above the drip tray 50 for example on a rack 100 shown in figures 5 and 6 and discussed below, such that the drip tray will collect the meat juices falling from the meat joint. A drain hole 54 and bung 56 may be provided in the drip tray 50 for the juices collected on the tray arising from the cooked meat to be easily poured off and removed. It will however be appreciated that in this cooking device 10, since the heat source is above the meat item 40 the juices falling from the meat as it cooks do not drip onto the heat source or heated walls of the oven cavity 20 and so do not burn or flare up but are retained on the drip tray 50. As a result little smoke is generated during cooking and the moist atmosphere in oven cavity 20 is maintained, rather than generating a smokey atmosphere.

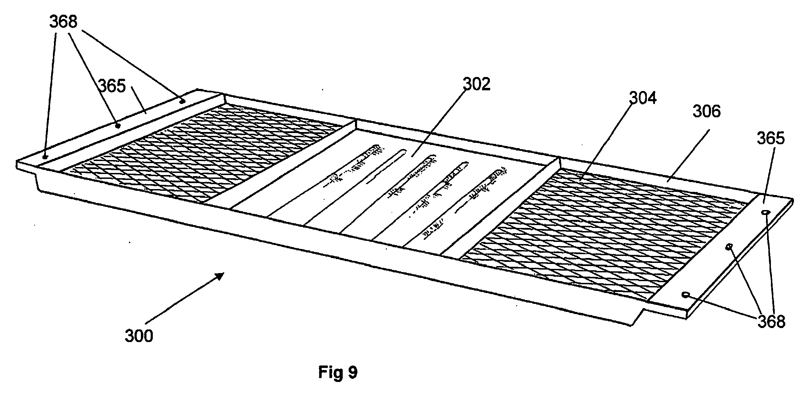

The cooking device 10 also includes an upper support frame 42 extending upwardly from the top plate 12, and configured to support various accessories above the top plate 12 and heat source. Using the upper support frame 42 grids or hotplates can be suspended over the heat source to enable simultaneous cooking. In particular the support frame 42 may be configured to support interchangeable panels such as barbecue grills, hotplates, or griddle 300 (Figure 9) upon which other food items may be placed and additional cooked with the heat from the heat source. This provides a secondary, upper cooking station in addition to the main lower oven style cooking station, and increases the flexibility of the cooking device, as well as further utilises the heat from the heat source in a conventional barbecue style. As shown in figure 9 the griddle hotplate 300 may comprise solid metal plate and/or grill portions 304 held within a frame 306 and upon which food items may be placed. The solid hot plate section 302 has the advantage that any fat or other juices and liquids from the food are retained on the plate 302 and do not fall onto the heat source below. The griddle hotplate 300 is arranged to be fitted onto the support frame 42 and including similar end frame members 365 with locating apertures 368 to engage locator pins 48 on the support frame 42

The support frame 42 is preferably arranged to support the accessories at an adjustable height above the top plate 12 and heat source. In this embodiment the support frame 42 comprises four support pillars 43 located at each corner of the device. Each distal end of pairs of the pillars 43 may be connected by a horizontal support beam 45. The pillars 43 may then be telescopic such that the can be raised and lowered to various heights and secured at any desired height either by pins, spring loaded detents or other methods. The support frame 42 and support pillars 43 are preferably removably mounted to the device and oven box structure so that they can be removed when not needed and/or for storage when the cooking device is not in use as well as for cleaning. For example Figure 8 shows the cooking device with the support frame 42 removed. The support frame 42 may also include locating mechanism so that when mesh grid or any other accessories are in place they are firmly located and cannot slip. For example, as shown the horizontal support beams 45 may include three upwardly projecting pins 48, similar to the projecting pins 44 on the top plate 12, which locate in corresponding apertures on the accessory, and for example in the griddle hot plate 300 or drip tray 50.

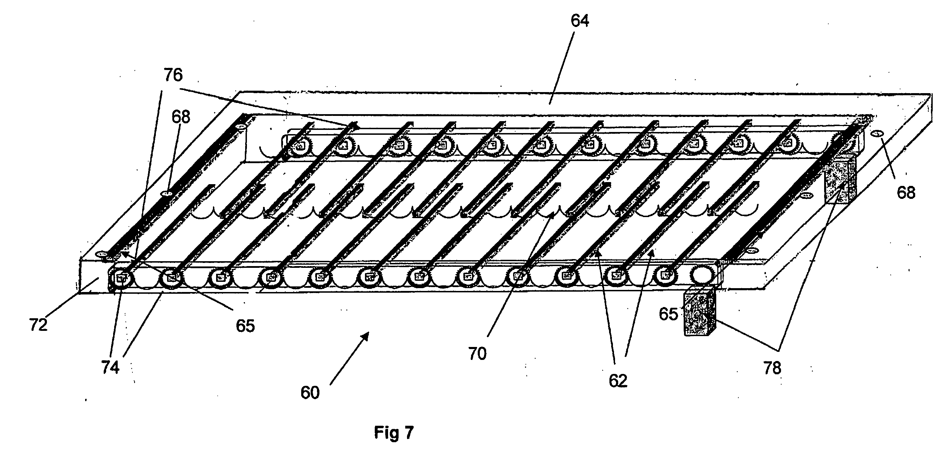

In one alternative embodiment a kebab rotisserie 60 or other similar device as shown in Figure 7 could be supported on the support frame 42. The rotisserie 60 comprises a plurality of laterally expending roller members 62 held at the ends within a rectangular frame 64. The frame is arranged to be fitted onto the support frame 42 and includes similar end frame members 65 with locating apertures 68 to engage the locator pins 48 on the support frame 42. The rollers 62, as shown may only extend half way across the frame and may have dials ends that are supported by a central support 70. The rollers 62 are rotatable mounted for example by suitable bearings within the frame 64 so as to rotate about their longitudinal axis. In addition a drive mechanism 72, for example gears 74 mounted on the end of the roller 62 and connected to a chain drive 76 and motor 78 may be provide to rotate the rollers. In this way small food items, for example sausages or kebabs can be support on the rollers and rotated by them as they are cooked from the heat source below the rotisserie and rollers 62.

The upper support frame 42 may also advantageously be used to support the drip tray 50 as shown in Figure 1. In particular the drip tray 50 is designed to be supported on the end supports 45 and includes locating apertures 58 to allow it to be located on the support frame 42, and pins 48, in the same way as the other accessories. This allows the meat item 40 to be suspended on the drip tray 50 at the appropriate height above the heat source. In this way the meat item if placed on the drip tray 50 can be further cooked more conventional from heat below. In addition this also provides a serving station and arrangement for carving and serving the meat with after cooking, with the heat source and remaining coals being used to keep the meat warm whilst it is served. The drip tray 50 also prevents the meat juices and meat falling on the solid fuel as it is served but still transmitting heat to the meat item.

The supporting frame 42 may also advantageously be used to support the fuel support32 high above the top plate, as shown in Figures 2 and 3. Accordingly the end frame member 34 of the fuel support 32 is configured and arranged to locate on the support frame 42 using the same locating apertures 46 engaging the similar locator pins 48 on the upper support frame 42. This may be useful when starting burning of the solid fuel by allowing better air circulation below the solid flue 36 support on the fuel support 32, and also can be used to reduce the heating of the top plate 12 and oven cavity 20 and so temperatures in the oven by removing the heat source, perhaps temporarily if it is getting too hot.

In addition, as shown in Figure 3 by placing the fuel support 32 on the upper support 42 it allows the ash 38 collecting on the top plate 12 to be more easily removed, without disturbing the solid fuel 36 held on the fuel support 32, which can then be later replaced to continue cooking and heating of the oven cavity 20.

The top plate 12 preferably also includes an upstanding peripheral edge flange 11 to retain the ashes 38 on the top plate 12. In particular since the top plate 12 is solid and non-perforated ash 38 is retained on the top plate 12 and does not fall though the top plate and into the oven cavity 20 and meat joint 40 therein. As shown the updated peripheral flange 11 does not however extend all the way along the top plate 12, and as shown may be omitted from one peripheral portion 13, and in this case one end. A tapered ash chute 80 comprises a bent plate having a first end 82 arranged to snugly fit the open end of the top plate and flush with the top plate, and tapered sides 84 leading to a narrower lower end 86 bent down from the first angle and at an angle to the first end 82. The ash chute 80 may include side walls (not shown) and/or be enclosed to prevent the ash spreading. The tapering ash chute 80 is designed to outfall into a metal hot ash container 88 which can be removed and emptied, with the ash chute 80 acting as funnel which may be fitted to the open side end of the top plate 12 to allow the ashes 38 to be scraped from into the ash chute 80 and funnelled into the ash container 88. The ash chute 80 is preferably located and mounted on the top plate 12 using the same locator pins 44 which engage locator apertures 90 in the ash chute 80 first end 82.

The meat joint 40 is preferably supported within a clamping rack 100 as shown in Figures 5 and 6 so that it can be more easily handled and turned over once during the cooking process, as well as retain the joint in one piece. The rack 100 comprises two identical racks 102,104 comprising a wire grid framework. The racks 102,104 are overlaid and are hingedly connected together along one long side by a suitable hinging mechanism. The hinge may comprise simple a shaped hooks 106 that hook over and link to the edges of the racks 102, 104. The meat item 40 is sandwiched between the racks 102,104 and the other edge of the racks 102,104, opposite the hinged edge is then secured together, again for example using S shaped hooks 106 to link the edge of the racks 102,104 together. The racks 102,104 may also include loop projections 112 protruding from their edges that act as feet to allow the meat item 40 when clamped between the racks 102,104 to stand on its edge resting on the loop projections 112 to support the meat item 40 and rack. The rack may be dimensioned and the ends 110 of the rack 102,104 may also be suitably configured so as to rest on shoulder ledges projecting inwardly from the end walls 14 of the oven cavity 20 to support the racks 102,104 and so meat joint 40 within the oven cavity 20.

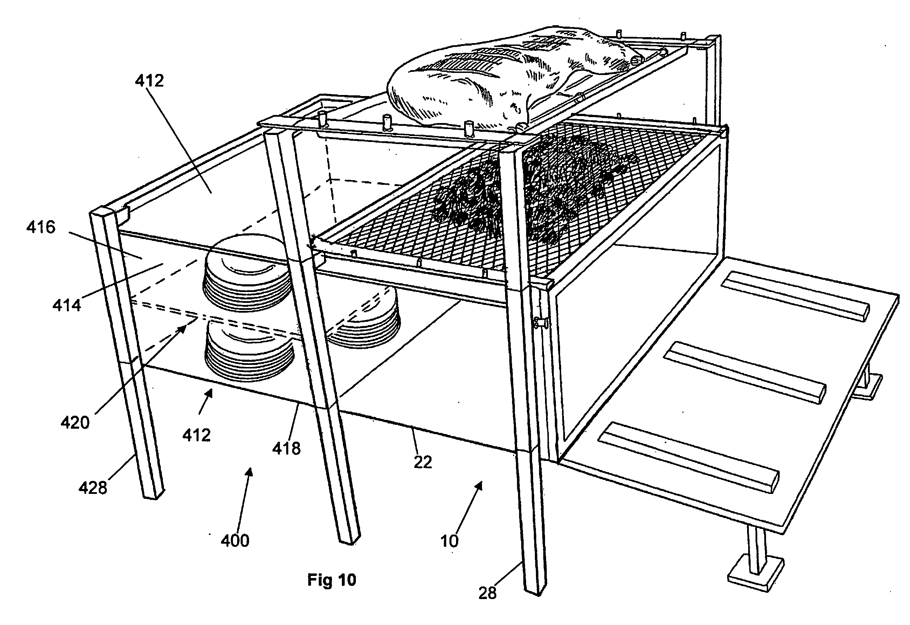

Figure 10 shows the cooking device 10 including an additional warming/heating extension 400. In this embodiment the rear wall 16 comprises a removable rear door panel which is removed such that the cooking device 10 and oven cavity 20 has an open rear wall 16. The warmer extension 400 comprises a further box structure 422 defined by a top plate 412, a bottom plate 418, end walls 414 and a rear wall 416 interconnecting and spacing apart the top and bottom plates 412,418 and defining an enclosed cavity 420 with an open front. The box structure 422 is supported on two further support legs 428 similar to the main support legs 28. As such the warmer 400 is generally similar to be oven box structure 22, and is of a similar size and construction. The open front of the warmer 400 is abutted and seals against the open rear wall 16 of the cooking device 10 and includes suitable peripheral seals (not shown) with preferably the warmer 400 mounted on the rear door hinges of the cooking device 10 in a similar manner to the mounting of the rear door. The rear wall 416 of the warmer extension 400 may be fixed or comprise a further moveable door panel, similar to the front door panel 24 of the cooking device 10 and/or may comprise the removed rear door panel of the cooking device 10 fitted to the warmer extension 410, to allow access to the warmer cavity 420. The oven cavity 20 is therefore still sealed by the warmer extension 400, and is warmed by the air and heat within the oven cavity 20. The top plate 412 of the warmer extension 400 does not however have any heat source and as such the enclosed cavity 420 of the warmer 400 is cooler than the main oven cavity 20. Plates and other food items may therefore be kept within and warmed within the warmer enclosed cavity 420 so as to warm items therein.

As can be seen a particular advantage of the cooking device as described abide is its modular constructions, with removable elements, that allows additional accessories to be added and interchanged improving the functionality and practicality of the device 10.

The cooking device 10 as well as providing improved cooking of the meat items, is also relatively economical with for example only 35kg of charcoal brickets being used to cook a whole pig. Similarly when using charcoal much less charcoal was needed than would be used in a conventional hog roast arrangement being used.

As well as proving an improved means for cooking large meat items, the cooking device 10 can also be used as an emergency cooking apparatus for mass catering for disaster relief. In particular the cooking device 10 provides a flexible cooking apparatus for efficiently cooking large quantities of food both within the oven cavity 20 and on the upper secondary cooking station and hot plate 300 etc. Since the cooking device utilises solid fuel it can also be used when no other fuel (electricity or gas) is available, and is more efficient that other, in particular individual cooking arrangements. In addition due to the arrangement of the cooing device 10 and in particular enclosed oven cavity 20 the cooking device 10 can also be used to sterilise equipment placed within the oven cavity 20, without contamination from the solid fuel and without the need for water.

Figures 11 to 13 show a cooking device 510 in accordance with another embodiment of the invention. This cooking device 510 is generally similar to the cooking device 10 described above and the same reference numerals will be used for the same or corresponding parts. In addition only the main differences in this embodiment will be described with the general arrangement and method of use of this embodiment being the same.

The cooking device 510 comprises a top plate 12, a bottom plate 18, end walls 14 and in this embodiment both front and rear door panels 24a, 24b forming walls of an oven box structure 22 and defining the enclosed oven cavity 20. The oven cavity 20 defined by the walls, and when the door panels 24 are closed, is a substantially sealed unit and oven cavity 20. The cooking device 510 and oven box structure 22 is supported on supports for example four legs 28 extending downwardly such that the cooking device 10 is supported at a convenient height from the ground. The legs 28 include lockable wheels or castors 512 to allow easier movement of the device 510.

The door panels 24a,24b are hinged along a bottom edge such that the door panel 24 can be pivoted to allow access to the interior cavity 20 (Figure 1). The door panels 24a,24b also include swing down legs 530 pivotally mounted to the door panels 24a,24b. The swing down legs 530 in this embodiment are formed from a single tube section bent into two U shaped sections. In figures 11 to 13 the legs 530 are shown in the stowed position resting adjacent the door panels 24a,24b, but can be pivot at an angle to the door panel 24a,24b with the distal ends of the legs 530 resting on the ground to support the door panels 24a,24b in a horizontal open position. When closed (Figures 2 & 3) the door panels 24a,24b may be firmly secured and held closed using latching devices 526. The provision of a second rear door panel 24b allows improved access into the oven cavity 20 in particular for cleaning. One door panel 24a could however be used.

The cooking device 510 also includes an upper support frame 542 extending above the top plate 12, and configured to support various accessories and interchangeable panels such as barbecue grills, hotplates, or griddle 300 (Figure 9) upon which other food items may be placed and additionally cooked with the heat from the heat source to provide a secondary, upper cooking station in addition to the main lower oven style cooking station. In this embodiment however the support frame 542 comprises two support pillars 543 located at the rear corners of the device 510. Each distal end of pairs of the pillars 543 is connected to and supports on one side a rectangular by a horizontal support frame 545 which supports the interchangeable panels, and for example as shown the griddle 300. The pillars 543 are, mounted to the box structure 22 such that they can be moved vertically to raise and lower the top frame 545. The pillars 543 preferably each also include a toothed rack 544 which is engaged by a pinion (not shown) rotated by a handle 546, to raise and lower and secure the pillars 543 and so top frame 545 at the desired height above the top plate 12 and heat source. The handle 546 may additionally also include a lock to prevent rotation and lock the height of the top frame 545. This provides a convenient way of adjusting the height of the top frame 545 and secondary cooking station thereby varying the temperature at which items are cooked at on the secondary upper station. In addition it allows the upper frame 545 to be lowered onto the top plate 12 and box structure 22 when not in use for ease of stowage and transportation of the cooking device 510.

The fuel support 32 mounted and supported above the top plate 12 and upon which the burning fuel 36 is supported, preferably also includes four lifting brackets 514 disposed towards the respective corners of the fuel support 32. The top frame 545 also preferably includes four corresponding lifting hooks 547 which are configured to attach to the lifting brackets 514 when the top frame 545 is in a lowered position. This allows the fuel support 32 to be easily lifted to allow any ash to be easily removed from the top plate 12, by simply lowering the top frame 545, attaching the lifting hooks 547 and then raising the top frame 545 with the attached fuel support 32. The length of the lifting hooks 547 in particular allow the top frame 545 to be connected to the fuel support while spaced away (typically about 125mm) from the fuel support 32 so as to accommodate, and not disturb the burning coals 36 resting on the fuel support 32. It will be appreciated that there may be other ways to attach the fuel support 32 to the top frame 545 to facilitate such lifting of the fuel support 32.

In this embodiment the separate ash chute 80 and ash container 88 have been integrated into a removable ash container 588. The removable ash container 588 is arranged and mounted on the end of the cooing device 510 with an open top of the container 588 adjacent to and aligned with the end of the top plate 12 such that ash on the top plate 12 can be directly scrapped over the end of the top plate 12 and into the top of the container 588. A lid 590 with a handle 592 is provided to close the top of the ash container 588. The ash container 588 is removably mounted on the end of the cooking device 510, and includes handles 594 to allow it to be lifted off the cooking device 510 and separately carried away and emptied. Preferably the ash container 588 and lid 590 has insulated walls such that the outside of the container 588 and lid 590 remain cool to touch when filed with hot ashes.

It will be appreciated that the exact details of the cooking device 10,510 may be varied in other embodiments and that a number of the features of the oven described above may be used in different combinations and arrangements. In particular the particular shape of the cooking device may be different in different embodiments and the number and arrangements of support legs 28 and of the upper support structure 42,542 may be varied.

The principle and mode of operation of this invention have been explained and illustrated in its preferred embodiment. However, it must be understood that this invention may be practiced otherwise than as specifically explained and illustrated without departing from its scope.

## Claims

1. A cooking device for cooking large food items comprising a plurality of walls (12,14,16,18) defining an enclosed oven cavity (20) for receiving the food items to be cooked, and a heat source (36) for heating the oven cavity (20); the plurality of walls including a top wall (12);
wherein the top wall (12) is non-perforated and the plurality of walls (12,14,16,18) define a substantially sealed oven cavity (20), and wherein the heat source (36) is arranged to directly heat the top wall (12) from above to heat the oven cavity (20), **characterised in that** the cooking device includes at least one moveable door (24) to allow access to the oven cavity (20), an upper support frame (42) extending upwardly above the top wall (12) and an additional element (60,300), wherein the support frame (42) is arranged to support the additional element (60,300) above the top wall (12) and heat source (36) such that the support frame (46) and additional element (60,300) define a secondary cooking station, and the support frame (46) is arranged to support the additional element (60,300) at an adjustable height above the top wall (12).

2. The cooking device of claim 1, wherein the top wall (12) is configured to support a solid fuel heat source (36).

3. The cooking device of claim 1 or 2, further comprising a fuel support (32) mesh or grill mountable above the top wall (12) to support a solid fuel heat source (36).

4. The cooking device of claim 2 or 3, further comprising an ash chute (80) attachable to the top wall (12).

5. The cooking device of claim 3 or 4, further comprising locators (44) on the top wall to support and locate the fuel support (32) and/or ash chute (80).

6. The cooking device of claim 1, wherein the heat source (36) comprises a gas burner mounted above and arranged to heat the top wall (12).

7. The cooking device of any one of the preceding claims, wherein the top wall includes an upstanding flange (11) extending upwardly from at least one edge of the wall (12).

8. The cooking device of claim 7, wherein the upstanding flange (11) does not extend from at least a portion of one edge of the top wall (12).

9. The cooking device of any one of the preceding claims, wherein the additional element (60,300) comprises a mesh or grill or hot plate or spit roast or automatic kebab rotary system or other accessory supportable on the support frame (42).

10. The cooking device of any one of the preceding claims, wherein the support frame (42) is adjustable to vary the height at which the additional element (60,300) is supported above the top wall (12).

11. The cooking device of claim 10, wherein the support frame (42) includes a plurality of pillars (543), said pillars (543) being movable to vertically to raise and lower the additional element (60,300).

12. The cooking device of claim 11, wherein each pillar (543) includes a toothed rack (544) which is engaged by a pinion, said arrangement being adjustable by a handle (546) to raise and lower the additional element (60,300).

13. The cooking device of claim 10, wherein the support frame (42) includes a plurality of telescopic pillars (43), which are adjustable to various heights.

14. The cooking device of any one of the preceding claims, wherein the support frame includes locators (48) configured to engage and locate the additional element (60,300) on the support frame (42).

15. The cooking device of any one of the preceding claims, further comprising downwardly extending legs (28) extending from the cooking device for supporting the cooking device.

16. The cooking device of any one of the preceding claims, wherein the door (24) is removable.

17. The cooking device of any one of the preceding claims, further comprising at least one adjustable vent in the wall and/or door panel.

18. The cooking device of any one of the preceding claims, wherein the door (24) is hinged along a bottom edge such that the door (24) is pivotable to allow access to the interior of the oven (20), and includes a swing down leg (30) that is pivotally mounted to the door (24) and is arranged to support the door (24) in a horizontal position.

## Patentansprüche

1. Kochvorrichtung zum Kochen großer Nahrungsmittel, umfassend eine Vielzahl von Wänden (12, 14, 16, 18), die einen geschlossenen Ofenraum (20) zur Aufnahme der zu kochenden Nahrungsmittel definieren, und eine Wärmequelle (36) zum Heizen des Ofenraums (20), wobei zu der Vielzahl von Wänden eine obere Wand (12) gehört,
wobei die obere Wand (12) nicht perforiert ist und die Vielzahl von Wänden (12, 14, 16, 18) einen im Wesentlichen abgedichteten Ofenraum (20) definieren und wobei die Wärmequelle (36) angeordnet ist, um zum Heizen des Ofenraums (20) die obere Wand (12) von oben direkt zu heizen, **dadurch gekennzeichnet, dass** die Kochvorrichtung wenigstens eine bewegliche Tür (24), um Zugang zum Ofenraum (20) zu ermöglichen, ein oberes Traggestell (42), das sich über der oberen Wand (12) aufwärts erstreckt, und ein zusätzliches Element (60, 300) beinhaltet, wobei das Traggestell (42) zum Tragen des zusätzlichen Elements (60, 300) über der oberen Wand (12) und der Wärmequelle (36) angeordnet ist, so dass das Traggestell (46) und das zusätzliche Element (60, 300) eine sekundäre Kochstelle definieren und das Traggestell (46) zum Tragen des zusätzlichen Elements (60, 300) auf einer verstellbaren Höhe über der oberen Wand (12) angeordnet ist.

2. Kochvorrichtung nach Anspruch 1, wobei die obere Wand (12) zum Tragen einer Festbrennstoff-Wärmequelle (36) gestaltet ist.

3. Kochvorrichtung nach Anspruch 1 oder Anspruch 2, die ferner ein Gitter oder einen Rost eines über der oberen Wand (12) montierbaren Brennstoffträgers (32) zum Tragen einer Festbrennstoff-Wärmequelle (36) aufweist.

4. Kochvorrichtung nach Anspruch 2 oder 3, die ferner eine Ascherutsche (80) aufweist, die an der oberen Wand (12) angebracht werden kann.

5. Kochvorrichtung nach Anspruch 3 oder 4, die ferner an der oberen Wand Passteile (44) zum Lagern und Positionieren des Brennstoffträgers (32) und/oder der Ascherutsche (80) aufweist.

6. Kochvorrichtung nach Anspruch 1, wobei die Wärmequelle (36) einen Gasbrenner umfasst, der über der oberen Wand (12) montiert und zum Heizen dieser angeordnet ist.

7. Kochvorrichtung nach einem der vorhergehenden Ansprüche, wobei die obere Wand eine aufrechte Rippe (11) beinhaltet, die sich von wenigstens einem Rand der Wand (12) aufwärts erstreckt.

8. Kochvorrichtung nach Anspruch 7, wobei die aufrechte Rippe (11) sich nicht von wenigstens einem Teil eines Rands der oberen Wand (12) erstreckt.

9. Kochvorrichtung nach einem der vorhergehenden Ansprüche, wobei das zusätzliche Element (60, 300) ein Gitter oder einen Rost oder eine Kochplatte oder ein Spießbraten- oder ein automatisches Grillspießrotationssystem oder ein anderes Zubehör, das auf dem Traggestell (42) gelagert werden kann, umfasst.

10. Kochvorrichtung nach einem der vorhergehenden Ansprüche, wobei das Traggestell (42) verstellbar ist, um die Höhe zu verstellen, auf der das zusätzliche Element (60, 300) über der oberen Wand (12) gelagert wird.

11. Kochvorrichtung nach Anspruch 10, wobei das Traggestell (42) eine Vielzahl von Ständern (543) beinhaltet, wobei die genannten Ständer (543) beweglich sind, um das zusätzliche Element (60, 300) senkrecht anzuheben oder zu senken.

12. Kochvorrichtung nach Anspruch 11, wobei jeder Ständer (543) eine Zahnstange (544) beinhaltet, in die ein Zahnrad eingreift, wobei die genannte Anordnung mit einem Griff (546) zum Heben und Senken des zusätzlichen Elements (60, 300) verstellbar ist.

13. Kochvorrichtung nach Anspruch 10, wobei das Traggestell (42) eine Vielzahl von Teleskopständern (43) beinhaltet, die auf verschiedene Höhen verstellbar sind.

14. Kochvorrichtung nach einem der vorhergehenden Ansprüche, wobei das Traggestell Passteile (48) beinhaltet, die gestaltet sind, um das zusätzliche Element (60, 300) auf dem Traggestell (42) einzurasten und zu positionieren.

15. Kochvorrichtung nach einem der vorhergehenden Ansprüche, die ferner sich abwärts erstreckende Beine (28) aufweist, die sich zum Tragen der Kochvorrichtung von der Kochvorrichtung erstrecken.

16. Kochvorrichtung nach einem der vorhergehenden Ansprüche, wobei die Tür (24) abnehmbar ist.

17. Kochvorrichtung nach einem der vorhergehenden Ansprüche, die ferner wenigstens eine verstellbare Lüftungsöffnung in der Wand und/oder der Türplatte aufweist.

18. Kochvorrichtung nach einem der vorhergehenden Ansprüche, wobei die Tür (24) an einem unteren Rand entlang angelenkt ist, so dass die Tür (24) geschwenkt werden kann, um Zugang zum Inneren des Ofens (20) zu ermöglichen, und ein abwärts klappbares Bein (30) beinhaltet, das schwenkbar an der Tür (24) montiert ist und zum Stützen der Tür (24) in einer horizontalen Stellung angeordnet ist.

## Revendications

1. Dispositif de cuisson pour cuire des denrées alimentaires volumineuses comprenant une pluralité de parois (12, 14, 16, 18) définissant une cavité de four confinée (20) pour recevoir les denrées alimentaires à cuire, et une source de chaleur (36) pour chauffer la cavité de four (20) ; la pluralité de parois comprenant une paroi supérieure (12) ;
où la paroi supérieure (12) est non perforée et la pluralité de parois (12, 14, 16, 18) définit une cavité de four substantiellement étanche (20), et où la source de chaleur (36) est disposée pour chauffer directement la paroi supérieure (12) depuis le haut afin de chauffer le cavité de four (20), **caractérisé en ce que** le dispositif de cuisson inclut au moins une porte mobile (24) pour permettre l'accès à la cavité de four (20), un cadre de support supérieur (42) s'étendant vers le haut au-dessus de la paroi supérieure (12) et un élément supplémentaire (60, 300), où le cadre de support (42) est disposé afin de supporter l'élément supplémentaire (60, 300) au-dessus de la paroi supérieure (12) et la source de chaleur (36) de telle sorte que le cadre de support (46) et l'élément supplémentaire (60, 300) définissent un poste de cuisson secondaire, et le cadre de support (46) est disposé afin de supporter l'élément supplémentaire (60, 300) à une hauteur réglable au-dessus de la paroi supérieure (12).

2. Dispositif de cuisson de la revendication 1, où la paroi supérieure (12) est configurée pour supporter une source de chaleur à combustible solide (36).

3. Dispositif de cuisson de la revendication 1 ou 2, comprenant en outre un maillage ou une grille de support de combustible (32) montable au-dessus de la paroi supérieure (12) afin de supporter une source de chaleur à combustible solide (36).

4. Dispositif de cuisson de la revendication 2 ou 3, comprenant en outre un déversoir de cendres (80) pouvant être fixé à la paroi supérieure (12).

5. Dispositif de cuisson de la revendication 3 ou 4, comprenant en outre des localisateurs (44) sur la paroi supérieure afin de supporter et localiser le support de combustible (32) et/ou déversoir de cendres (80).

6. Dispositif de cuisson de la revendication 1, où la source de chaleur (36) comprend un brûleur à gaz monté sur le dessus et disposé pour chauffer la paroi supérieure (12).

7. Dispositif de cuisson d'une quelconque des revendications précédentes, où la paroi supérieure inclut une bride verticale (11) s'étendant vers le haut à partir d'au moins un bord de la paroi (12).

8. Dispositif de cuisson de la revendication 7, où la bride verticale (11) ne s'étend pas à partir d'au moins une partie d'un bord de la paroi supérieure (12).

9. Dispositif de cuisson d'une quelconque des revendications précédentes, où l'élément supplémentaire (60, 300) comprend un maillage ou une grille ou plaque chaude ou broche ou système rotatif automatique pour kebab ou autre accessoire pouvant être supporté sur le cadre de support (42).

10. Dispositif de cuisson d'une quelconque des revendications précédentes, où le cadre de support (42) est réglable pour faire varier la hauteur à laquelle l'élément supplémentaire (60, 300) est supporté au-dessus de la paroi supérieure (12).

11. Dispositif de cuisson de la revendication 10, où le cadre de support (42) inclut une pluralité de piliers (543), lesdits piliers (543) étant mobiles verticalement pour soulever et abaisser l'élément supplémentaire (60, 300).

12. Dispositif de cuisson de la revendication 11, où chaque pilier (543) inclut une crémaillère (544) qui est mise en prise par un pignon, ledit agencement étant réglable par une poignée (546) pour soulever et abaisser l'élément supplémentaire (60, 300).

13. Dispositif de cuisson de la revendication 10, où le cadre de support (42) inclut une pluralité de piliers télescopiques (43), qui sont réglables à différentes hauteurs.

14. Dispositif de cuisson d'une quelconque des revendications précédentes, où le cadre de support inclut des localisateurs (48) configurés pour mettre en prise et localiser l'élément supplémentaire (60, 300) sur le cadre de support (42).

15. Dispositif de cuisson d'une quelconque des revendications précédentes, comprenant en outre des jambes s'étendant vers le bas (28), s'étendant à partir du dispositif de cuisson pour supporter le dispositif de cuisson.

16. Dispositif de cuisson d'une quelconque des revendications précédentes, où la porte (24) est amovible.

17. Dispositif de cuisson d'une quelconque des revendications précédentes, comprenant en outre au moins un évent réglable dans la paroi et/ou le panneau de porte.

18. Dispositif de cuisson d'une quelconque des revendications précédentes, où la porte (24) est articulée le long d'un bord inférieur de telle sorte que la porte (24) puisse pivoter pour permettre l'accès à l'intérieur du four (20), et inclut une jambe rabattable vers le bas (30) qui est montée de manière pivotante à la porte (24) et est disposée afin de supporter la porte (24) dans une position horizontale.
